# EUROPÄISCHE PATENTANMELDUNG

(11) **EP 1 496 335 A2**
(43) Veröffentlichungstag der Anmeldung: **12.01.2005**
(21) Anmeldenummer: 04015730.7
(22) Anmeldetag: 03.07.2004
(51) Int. Cl.: G01B 11/02

(54) **Optoelektronische Vorrichtung**

(30) Priorität: 11.07.2003 DE 10331375
(71) Anmelder: Leuze electronic GmbH + Co KG, 73277 Owen/Teck (DE)
(72) Erfinder: Argast, Martin, 72584 Hülben (DE)
(74) Vertreter: Ruckh, Rainer Gerhard, Dr.

(57) **Zusammenfassung**

Die Erfindung betrifft eine optoelektronische Vorrichtung (1) zur Erfassung von Objekten (6) in einem Überwachungsbereich, mit einem Sendelichtstrahlen (3) emittierenden Sender (2), einem Empfangslichtstrahlen (4) empfangenden Empfänger (5) und einer Auswerteeinheit (8), in welcher die am Ausgang (9) des Empfängers (5) anstehenden Empfangssignale zur Generierung eines Objektfeststellungssignals ausgewertet werden. Der Empfänger (5) weist wenigstens eine Zeile mit Empfangselementen (5a) auf, wobei der Sender (2) zentrisch vor der Zeile angeordnet ist. In der Auswerteeinheit (8) wird aus dem Verlauf der Empfangssignale der einzelnen Empfangselemente (5a) die Lage eines Objektes (6) im Überwachungsbereich bestimmt.

## Beschreibung

Die Erfindung betrifft eine optoelektronische Vorrichtung gemäß dem Oberbegriff des Anspruchs 1.

Derartige optoelektronische Vorrichtungen sind insbesondere als Distanzsensoren ausgebildet. Eine derartige optoelektronische Vorrichtung ist beispielsweise aus der DE 198 50 270 A1 bekannt. Die Distanzbestimmung mittels dieser optoelektronischen Vorrichtung erfolgt nach dem Triangulationsprinzip. Hierzu weist die optoelektronische Vorrichtung einen Sendelichtstrahlen emittierenden Sender und einen Empfangslichtstrahlen empfangenden Empfänger auf. Der Empfänger, der von einer CCD-Zeile gebildet ist, liegt in Abstand neben dem Sender. Je nach Distanz eines Objektes zur optoelektronischen Vorrichtung werden die Sendelichtstrahlen, die vom Sender emittiert werden, in unterschiedlichen Winkeln von der Objektoberfläche als Empfangslichtstrahlen zurückreflektiert und treffen entsprechend an unterschiedlichen Stellen der lichtempfindlichen Fläche des Empfängers auf. Durch Auswertung der Lage des Schwerpunkts des Empfangslichtflecks auf der lichtempfindlichen Fläche des Empfängers wird in der Auswerteeinheit die Distanz des detektierten Objektes zur optoelektronischen Vorrichtung bestimmt.

Der Erfindung liegt die Aufgabe zugrunde eine optoelektronische Vorrichtung der eingangs genannten Art mit erhöhter Nachweisempfindlichkeit und erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Objekten in einem Überwachungsbereich. Die optoelektronische Vorrichtung umfasst einen Sendelichtstrahlen emittierenden Sender, einen Empfangslichtstrahlen empfangenden Empfänger und eine Auswerteeinheit, in welcher die am Ausgang des Empfängers anstehenden Empfangssignale zur Generierung eines Objektfeststellungssignals ausgewertet werden. Der Empfänger weist wenigstens eine Zeile mit Empfangselementen auf, wobei der Sender zentrisch vor der Zeile angeordnet ist. In der Auswerteeinheit wird aus dem Verlauf der Empfangssignale der einzelnen Empfangselemente die Lage eines Objektes im Überwachungsbereich bestimmt.

Ein wesentlicher Vorteil der erfindungsgemäßen optoelektronischen Vorrichtung besteht darin, dass mit dieser durch Auswertung des Verlaufs der Empfangssignale der einzelnen Empfangselemente des Empfängers nicht nur die Distanz eines Objektes zur optoelektronischen Vorrichtung, sondern auch die Orientierung der Objektoberfläche und die Oberflächenbeschaffenheit der Objektoberfläche detektierbar ist.

Bei einem zeilenförmigen Empfänger werden durch dessen zum Sender zentrische Anordnung bei der Detektion eines vollständig im Überwachungsbereich liegenden Objekts zwei Maxima der Pegel der Empfangssignale an den einzelnen Empfangselementen erhalten, die symmetrisch zum Zentrum des Empfängers liegen. Der Abstand dieser Maxima liefert ein Maß für die Distanz des Objekts zur optoelektronischen Vorrichtung.

Da zur Distanzbestimmung zwei Maxima der Empfangssignale als redundante Distanzinformation zur Verfügung stehen, wird bei der optoelektronischen Vorrichtung eine erhöhte Nachweisempfindlichkeit erhalten.

Besonders vorteilhaft hierbei ist, dass auch Objektkanten bei in den Überwachungsbereich eindringenden Objekten erfasst werden können. Da in diesem Fall zumindest ein Maximum der Empfangssignalpegel der Empfangselemente erhalten wird, ist auch in diesem Fall noch eine exakte Distanzbestimmung des Objektes möglich.

Durch Auswertung der Pegel der Maxima der Empfangssignale kann zudem die Orientierung der Objektoberfläche zur optoelektronischen Vorrichtung ermittelt werden. Dadurch wird bei der optoelektronischen Vorrichtung eine gegenüber herkömmlichen Distanzsensoren erhöhte Funktionalität erhalten.

Weiterhin können durch Auswertung der Pegel der Empfangssignale der Empfangselemente, insbesondere durch einen Vergleich der Pegel der Maxima zu den übrigen Empfangssignalen, Informationen über die Oberflächenbeschaffenheit der Objekte gewonnen werden. Insbesondere können diffus reflektierende Objekte von gerichtet reflektierenden Objekten, wie Reflektoren, unterschieden werden. Dadurch wird die Funktionalität der erfindungsgemäßen optoelektronischen Vorrichtung weiter erhöht.

Ein weiterer Vorteil der erfindungsgemäßen optoelektronischen Vorrichtung besteht darin, dass diese einen einfachen und kostengünstigen Aufbau aufweist. Der Empfänger in Form einer Zeile oder Matrix aus CCD-Elementen oder CMOS-Elementen bildet ein preisgünstiges Bauteil. Vorteilhaft ist weiterhin, dass die Empfangssignale direkt, das heißt ohne weitere Hardwarebeschaltung in der Auswerteeinheit, die von einem Mikroprozessor oder dergleichen gebildet ist, ausgewertet werden. Dadurch weist die optoelektronische Vorrichtung nur eine geringe Anzahl von Bauelementen auf, wodurch diese mit geringen Herstellkosten und geringem Montageaufwand gefertigt werden kann.

Ein weiterer Vorteil der erfindungsgemäßen optoelektronischen Vorrichtung besteht darin, dass die zentrische Anordnung des Empfängers zum Sender keine aufwändige Justage des Empfängers relativ zum Sender erforderlich macht.

Weiterhin ist vorteilhaft, dass durch die koaxiale Anordnung von Sender und Empfänger eine kleine Bauform der optoelektronischen Vorrichtung erzielt werden kann. Insbesondere kann die optoelektronische Vorrichtung in einem Rundhülsengehäuse integriert sein und dabei als einlinsiges System ausgebildet sein, das heißt die Sendelichtstrahlen des Senders und die zum Empfänger geführten Empfangslichtstrahlen durchsetzen eine gemeinsame Optik.

Die Erfindung wird im Nachstehenden anhand der Zeichnungen erläutert. Es zeigen:
- Figur 1:: Blockschaltbild eines Ausführungsbeispiels einer optoelektronischen Vorrichtung zur Erfassung von Objekten in einem Überwachungsbereich.
- Figur 2:: Detaillierte Darstellung der optischen Komponenten der optoelektronischen Vorrichtung gemäß Figur 1.
- Figur 3:: Darstellung des Empfangslichtflecks auf dem Empfänger der optoelektronischen Vorrichtung gemäß Figur 1 mit zugehörigem Signalverlauf bei einem Objekt im Nahbereich.
- Figur 4:: Darstellung des Empfangslichtflecks auf dem Empfänger der optoelektronischen Vorrichtung gemäß Figur 1 mit zugehörigem Signalverlauf bei einem Objekt im Fernbereich.
- Figur 5:: Strahlengang der Sendelichtstrahlen und Empfangslichtstrahlen der optoelektronischen Vorrichtung gemäß Figur 1 bei Detektion eines Objektes mit einer Konturkante.
- Figur 6:: Verlauf der Empfangssignale für die Anordnung gemäß Figur 5.
- Figur 7:: Strahlengang der Sendelichtstrahlen und Empfangslichtstrahlen der optoelektronischen Vorrichtung gemäß Figur 1 bei Detektion eines geneigten spiegelnden Objekts.
- Figur 8:: Verlauf der Empfangssignale für die Anordnung gemäß Figur 7.
- Figur 9:: Strahlengang der Sendelichtstrahlen und Empfangslichtstrahlen der optoelektronischen Vorrichtung gemäß Figur 1 bei Detektion eines Reflektors.
- Figur 10:: Strahlengang der Sendelichtstrahlen und Empfangslichtstrahlen der optoelektronischen Vorrichtung gemäß Figur 1 bei Detektion eines Objekts mit vorgelagerter Streufolie.
- Figur 11:: Verläufe der Empfangssignale für die Anordnungen gemäß den Figuren 9 und 10.
- Figur 12:: Strahlengang der Sendelichtstrahlen und Empfangslichtstrahlen der optoelektronischen Vorrichtung gemäß Figur 1 bei Detektion eines Objekts mit vorgelagerter Klarsichtfolie.
- Figur 13:: Verlauf der Empfangssignale für die Anordnung gemäß Figur 12.
- Figur 14:: Schematische Darstellung eines als Array ausgebildeten Empfängers für die optoelektronische Vorrichtung gemäß Figur 1.

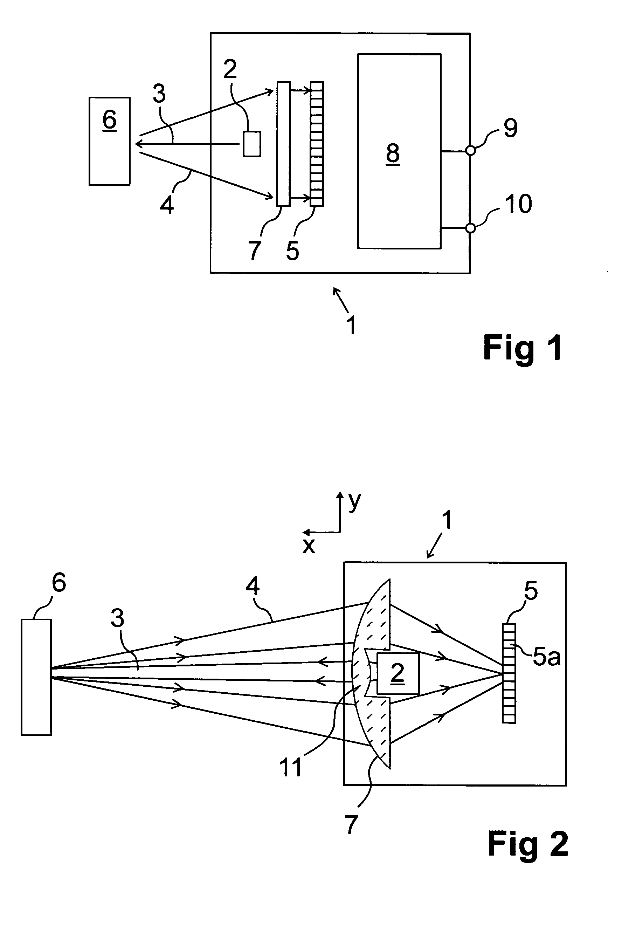

Die Figuren 1 und 2 zeigen ein erstes Ausführungsbeispiel einer optoelektronischen Vorrichtung 1. Die optoelektronische Vorrichtung 1, die in einem nicht gesondert dargestellten Gehäuse integriert ist, weist einen Sender 2 in Form einer Laserdiode auf, welcher Sendelichtstrahlen 3 emittiert, die in einen Überwachungsbereich geführt sind. Weiterhin umfasst die optoelektronische Vorrichtung 1 einen Empfangslichtstrahlen 4 empfangenden Empfänger 5. Die von einem im Überwachungsbereich angeordneten Objekt 6 zurückreflektierten Empfangslichtstrahlen 4 werden über eine Empfangsoptik 7 auf den Empfänger 5 geführt.

Der Sender 2 und der Empfänger 5 sind an eine Auswerteeinheit 8 angeschlossen, die von einem Mikroprozessor oder dergleichen gebildet ist. Mit der Auswerteeinheit 8 wird der Sender 2 angesteuert. Zudem werden in der Auswerteeinheit 8 die Empfangssignale des Empfängers 5 zur Generierung eines Objektfeststellungssignals ausgewertet. Das Objektfeststellungssignal ist über wenigstens einen Ausgang 9 ausgebbar. Zudem weist die optoelektronische Vorrichtung 1 wenigstens einen Eingang 10 zur Eingabe von Parameterwerten in die Auswerteeinheit 8 auf.

Der Sender 2 kann prinzipiell über die Auswerteeinheit 8 im Dauerbetrieb betrieben werden. Im vorliegenden Fall wird der Sender 2 im Pulsbetrieb betrieben, das heißt der Sender 2 emittiert Sendelichtstrahlen 3 in Form von Sendelichtimpulsen mit einem vorgegebenen Puls-Pausen-Verhältnis. Dabei werden bevorzugt jeweils während der darauf folgenden Sendepause jeweils die Empfangssignale registriert, wobei in der Auswerteeinheit 8 die Differenz dieser Empfangssignale zur Elimination von Störlichteinflüssen, wie Umgebungslicht, gebildet wird.

Der Empfänger 5 der optoelektronischen Vorrichtung 1 gemäß den Figuren 1 und 2 besteht aus einer zeilenförmigen Anordnung von Empfangselementen 5a. Die Empfangselemente 5a können prinzipiell von diskreten Fotodioden gebildet sein. Im vorliegenden Fall besteht der Empfänger 5 aus einer CCD-Zeile. Alternativ kann der Empfänger 5 von einer CMOS-Zeile gebildet sein.

Der Empfänger 5 ist zentrisch zum Sender 2 angeordnet. Dabei liegt der Sender 2 vor dem Empfänger 5, so dass der zentrale Teil des Empfängers 5 durch den Sender 2 abgeschattet wird. Die optische Achse des Senders 2 fällt dabei mit dem Normalenvektor der lichtempfindlichen Fläche des Empfängers 5 zusammen, das heißt die Ebene des Empfängers 5 verläuft senkrecht zur Strahlrichtung der Sendelichtstrahlen 3.

Figur 2 zeigt eine bevorzugte Anordnung der Optikkomponenten der optoelektronischen Vorrichtung 1 gemäß Figur 1. Die Empfangsoptik 7 ist von einer Linse gebildet, die dem Empfänger 5 vorgeordnet ist. Mittels der Empfangsoptik 7 werden die vom Objekt 6 zurückreflektierten Empfangslichtstrahlen 4 auf den Empfänger 5 fokussiert. Der Sender 2 ist in einer Aussparung an der dem Empfänger 5 zugeordneten Rückseite der Empfangsoptik 7 angeordnet. Der vor dem Sender 2 liegende Abschnitt der Empfangsoptik 7 ist als Linsenelement 7a ausgebildet, mittels derer eine Strahlformung der Sendelichtstrahlen 3 erfolgt und damit eine in der Empfangsoptik 7 integrierte Sendeoptik 11 bildet.

Dadurch wird ein einlinsiges System mit koaxialem Strahlverlauf der Sendelichtstrahlen 3 und der Empfangslichtstrahlen 4 erhalten. Diese Anordnung ist insbesondere dann vorteilhaft, wenn die optoelektronische Vorrichtung 1 in einem Rundhülsengehäuse integriert werden soll.

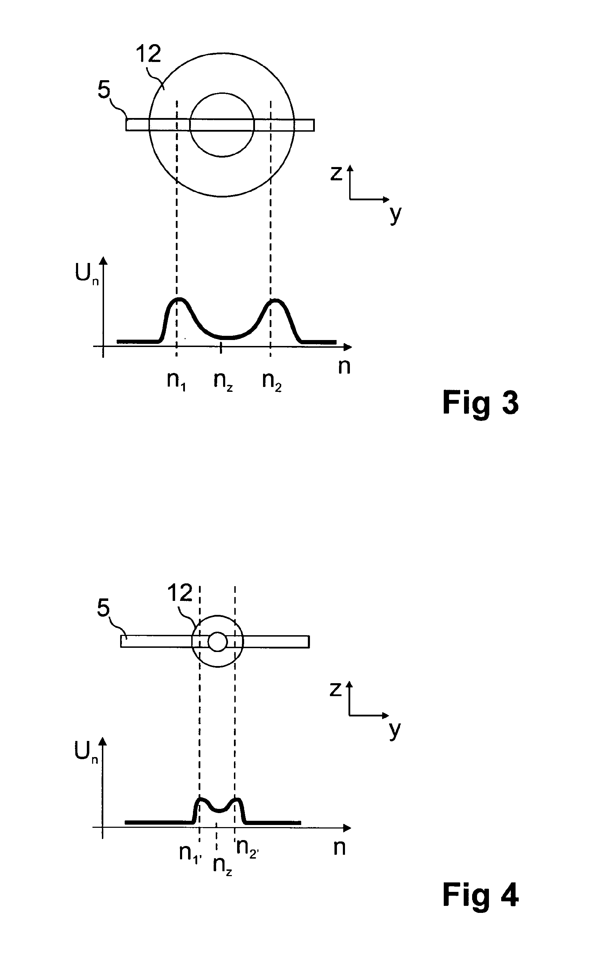

Mit der optoelektronischen Vorrichtung 1 gemäß Figur 1 ist die Distanz eines Objektes 6 bestimmbar. Die Funktionsweise der Distanzmessung ist in den Figuren 3 und 4 veranschaulicht. Dabei zeigt Figur 3 den auf dem Empfänger 5 abgebildeten Empfangslichtfleck 12 bei Detektion eines Objektes 6 im Nahbereich sowie die dabei erhaltenen Pegel der Empfangssignale Uₙ der einzelnen Empfangselemente 5a, die in Figur 3 mit n nummeriert sind.

Entsprechend zeigt Figur 4 den Empfangslichtfleck 12 auf dem Empfänger 5 bei Detektion eines Objektes 6 im Fernbereich sowie die dabei registrierten Empfangssignale Eₙ der Empfangselemente 5a.

Da der Sender 2 mittig vor dem Empfänger 5 angeordnet ist, werden die zentralen Empfangselemente 5a durch den Sender 2 abgeschattet, so dass auf diese keine Empfangslichtstrahlen 4 auftreffen. Dementsprechend wird sowohl bei der Detektion des Objekts 6 im Nahbereich als auch im Fernbereich ein ringförmiger Empfangslichtfleck 12 auf dem Empfänger 5 erhalten.

Bei einem Objekt 6 im Nahbereich, das heißt in geringer Distanz zur optoelektronischen Vorrichtung 1, wird ein größerer Empfangslichtfleck 12 als bei der Detektion eines Objekts 6 im Fernbereich, das heißt in größerer Distanz zur optoelektronischen Vorrichtung 1, erhalten. Dies ist in den Figuren 3 und 4 veranschaulicht.

Entsprechend der unterschiedlichen Größen der Empfangslichtflecke 12 liegen dessen Schwerpunkte auf dem zeilenförmigen Empfänger 5 bei unterschiedlichen Empfangselementen 5a. Wie aus Figur 3 ersichtlich, liegen die Maxima der Empfangssignale Uₙ bei der Detektion des Objekts 6 im Nahbereich bei den mit n₁ und n₂ bezeichneten Empfangselementen 5a. Demgegenüber liegen die Maxima der Empfangssignale Uₙ bei der Detektion des Objektes 6 im Fembereich bei den mit n₁' und n₂' bezeichneten Empfangselementen 5a. Sowohl bei der Detektion des Objekts 6 im Nahbereich als auch im Fernbereich liegen die Maxima der Empfangssignale symmetrisch zum Zentrum des Empfängers 5 und damit symmetrisch zum zentralen Empfangselement 5a des Empfängers 5, welches in den Figuren 3 und 4 mit n_{z} bezeichnet ist und welches in der optischen Achse des Senders 2 liegt. Dieses zentrale Empfangselement n_{z} kann insbesondere in einem Einlernvorgang bestimmt und in der Auswerteeinheit 8 abgespeichert werden.

Der Abstand eines Empfangselementes n₁, n₁', n₂, n₂' bei welchen ein Maximum der Empfangssignale Uₙ vorliegt, relativ zum zentralen Empfangselement n_{z} liefert ein direktes Maß für die Objektdistanz. Dabei ist die Objektdistanz umso größer, je kleiner dieser Abstand ist. Da bei jeder Objektdetektion bei den in den Figuren 3 und 4 dargestellten Fällen jeweils zwei Maxima der Empfangssignale bei n₁ und n₂ (Figur 3) beziehungsweise n₁' und n₂' (Figur 4) erhalten werden, steht eine redundante Signalinformation zur Bestimmung der Objektdistanz in der Auswerteeinheit 8 zur Verfügung.

Der in der Auswerteeinheit 8 ermittelte Distanzwert kann als analoges Objektfeststellungssignal über den Ausgang 9 ausgegeben werden. Alternativ oder zusätzlich können in der Auswerteeinheit 8 die ermittelten Distanzmesswerte mit einem Schwellwert bewertet werden, welcher einer Grenzreichweite entspricht. Durch diesen Schwellwertvergleich wird ein binäres Objektfeststellungssignal generiert, dessen Schaltzustände angeben, ob sich ein Objekt 6 innerhalb eines von der Grenzreichweite begrenzten Distanzbereichs befindet oder nicht. Prinzipiell können die Distanzmesswerte auch mit mehreren Schwellwerten bewertet werden.

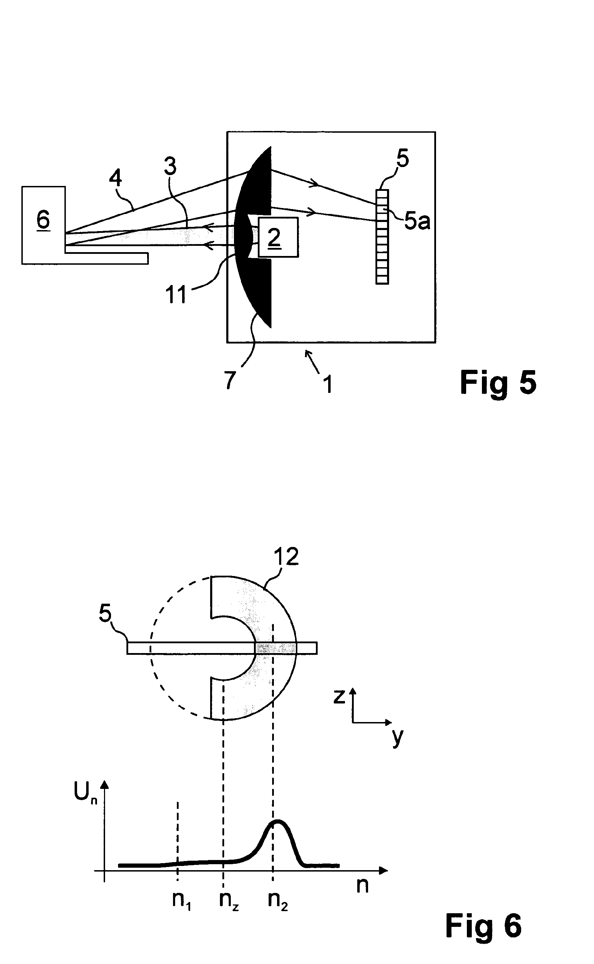

Figur 5 zeigt schematisch den Strahlverlauf der Sendelichtstrahlen 3 und Empfangslichtstrahlen 4 der optoelektronischen Vorrichtung 1 gemäß den Figuren 1 und 2 bei der Detektion eines Objektes 6 mit einer Konturkante, wobei die Empfangslichtstrahlen 4 nur über eine Hälfte der Empfangsoptik 7 zum Empfänger 5 gelangen, da der andere Teil durch eine vorstehende Objektkante abgeschattet wird. Dabei entspricht die Objektdistanz dem in Figur 3 dargestellten Fall.

Demzufolge wird anders als bei dem in Figur 3 dargestellten Fall nur ein Ausschnitt des ringförmigen Empfangslichtflecks 12 auf den Empfänger 5 abgebildet. Demzufolge wird bei der Detektion der Objektkante gemäß Figur 5 nur ein Maximum der Empfangssignale bei dem Empfangselement n₂ erhalten (Figur 6). Die Auswertung des Abstands des Empfangselementes n₂ zum zentralen Empfangselement n_{z} reicht jedoch zur Bestimmung der Objektdistanz aus. Durch die weitere Auswertung des Verlaufs der Empfangssignale gemäß Figur 6, nämlich durch Registrieren lediglich eines Maximums der Empfangssignale wird in der Auswerteeinheit 8 erkannt, dass eine Objektkante registriert wurde. Diese Information kann zusätzlich über den oder einen weiteren Ausgang 9 der optoelektronischen Vorrichtung 1 ausgegeben werden.

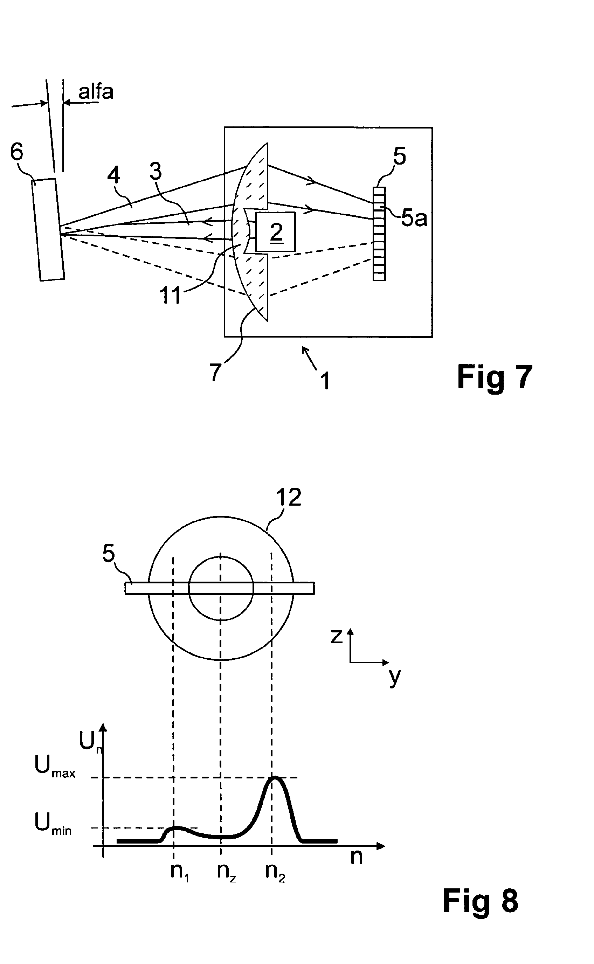

Figur 7 zeigt schematisch den Strahlverlauf der Sendelichtstrahlen 3 und Empfangslichtstrahlen 4 der optoelektronischen Vorrichtung 1 gemäß den Figuren 1 und 2 bei der Detektion eines Objektes 6, dessen Oberfläche geneigt zur Frontseite der optoelektronischen Vorrichtung 1 ist. Wie aus Figur 3 ersichtlich, ist der Normalenvektor der Objektoberfläche um einen Winkel alfa bezüglich der optischen Achse des Senders 2 geneigt. Die Distanz des Objektes 6 zur optoelektronischen Vorrichtung 1 entspricht dabei dem in Figur 3 dargestellten Fall.

Durch diese Neigung erfolgt eine bezüglich des zentralen Empfangselements n_{z} asymmetrische Abbildung des Empfangslichtflecks 12 auf den Empfänger 5 (Figur 8). Durch die Neigung der Objektoberfläche ist insbesondere der Pegel des Maximums der Empfangssignale bei dem Empfangselement n₂ (Uₘₐₓ) höher als der Pegel des Maximums bei dem Empfangselement n₁.

Durch Vergleich der Pegelwerte Uₘₐₓ und Uₘᵢₙ kann in der Auswerteeinheit 8 die Neigung der Objektoberfläche bestimmt und als Zusatzinformation über den oder einen weiteren Ausgang 9 ausgegeben werden.

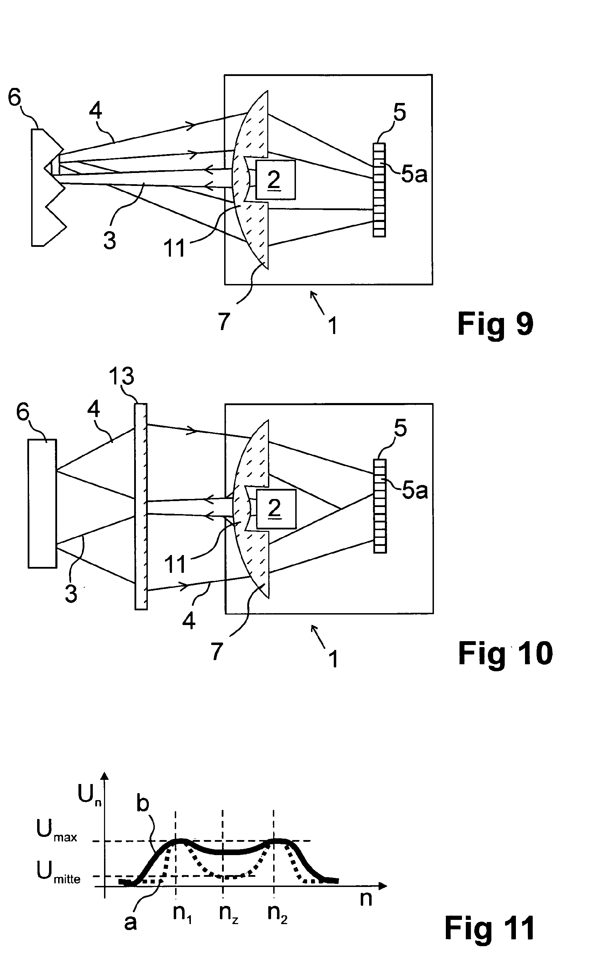

Figur 9 zeigt den Strahlengang der Sendelichtstrahlen 3 und Empfangslichtstrahlen 4 der optoelektronischen Vorrichtung 1 gemäß den Figuren 1 und 2 bei der Detektion eines Objekts 6, welches als Reflektor mit Tripelstruktur ausgebildet ist. Die Empfangslichtstrahlen 4 werden durch den Tripel seitlich versetzt zu den Sendelichtstrahlen 3 reflektiert und je nach Lage mehr zur Zeilenmitte oder zum Zeilenrand des Empfängers 5 gelenkt. Dadurch wird ein breiterer Zeilenbereich ausgeleuchtet.

Figur 10 zeigt den Strahlengang der Sendelichtstrahlen 3 und Empfangslichtstrahlen 4 der optoelektronischen Vorrichtung 1 gemäß den Figuren 1 und 2 bei der Detektion eines Objekts 6 mit einer vorgelagerter Streufolie 13, die die Sendelichtstrahlen 3 und die vom Objekt 6 reflektierten Empfangslichtstrahlen 4 aufweitet. Dadurch wird nahezu die gesamte Zeilenbreite des Empfängers 5 ausgeleuchtet.

Der Verlauf der Empfangssignale Uₙ für die Objektdetektion gemäß Figuren 9 und 10 ist in Figur 11 mit b bezeichnet. Die gestrichelte Kurve a stellt den Verlauf der Empfangssignale von Figur 3 dar. Durch die Aufstreuung von tripelartigen Oberflächen oder vorgelagerten Streufolien wird der Signalverlauf breiter und das Minimum zwischen den beiden Maxima flacher.

Die Auswertung der Objektdistanz erfolgt wiederum durch Bestimmung der Abstände der Empfangselemente n₁, n₂ der Maxima der Empfangspegel Uₙ relativ zum zentralen Empfangselement n_{z}.

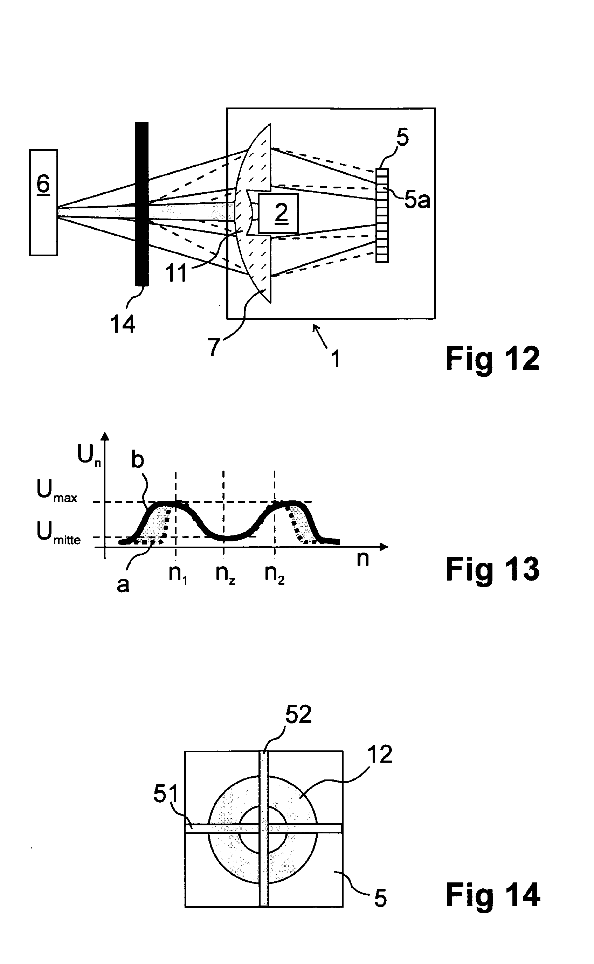

Figur 12 zeigt den Strahlengang der Sendelichtstrahlen 3 und Empfangslichtstrahlen 4 der optoelektronischen Vorrichtung 1 gemäß den Figuren 1 und 2 der optoelektronischen Vorrichtung 1 bei der Detektion einer vor einem Objekt 6 angeordneten Klarsichtfolie 14, wie es bei Folienverpackungen häufig der Fall ist. Zur Detektion der Klarsichtfolie 14 vor dem Objekt 6 wird zunächst der in Figur 13 mit a bezeichnete Empfangssignalverlauf bei der Detektion des Objekts 6 in seiner Sollposition ohne vorgeordnete Klarsichtfolie 14 bestimmt und in der Auswerteeinheit 8 als Referenzwerte abgespeichert. Entsprechend der Objektdistanz weist dieser Empfangssignalverlauf zwei Maxima bei den Empfangselementen n₁ und n₂ auf.

Wird die Klarsichtfolie 14 vor dem Objekt 6 positioniert, so wird an dieser ein geringer Teil der Sendelichtstrahlen 3 reflektiert und zum Empfänger 5 geführt. Dadurch ergibt sich eine Verbreiterung der Peaks des Empfangssignals, wie aus dem mit b bezeichneten Empfangssignalverlauf in Figur 13 für die Detektion der Klarsichtfolie 14 ersichtlich ist. Diese Verbreiterung ist abhängig von der Distanz der Klarsichtfolie 14 zur optoelektronischen Vorrichtung 1. Durch Auswertung des Verlaufs der Empfangssignale und Vergleich mit den Referenzwerten kann somit eine Information über die Lage der Klarsichtfolie 14 relativ zum Objekt 6 erhalten werden.

Figur 14 zeigt schematisch einen Empfänger 5 mit einer matrixförmigen Anordnung von Empfangselementen 5a, wobei dieser insbesondere als CCD-Array oder CMOS-Array ausgebildet sein kann. Über die Auswerteeinheit 8 können gezielt einzelne Zeilen 51 oder Spalten 52, bestehend jeweils aus einer Linearanordnung von Empfangselementen 5a ausgelesen und deren Empfangssignale zur Objektdetektion ausgewertet werden. Dabei werden mindestens eine Zeile 51 und eine Spalte 52 ausgewertet, die vorzugsweise durch die Mitte des Arrays 15 gehen. Damit können Neigungen von spiegelnden Objekten 6 in allen Richtungen erfasst werden. Außerdem liefert diese Anordnung mehr redundante Informationen, um die Objektdistanz beziehungsweise andere Objektmerkmale sicherer zu erfassen.

### Bezugszeichenliste

- (1): Optoelektronische Vorrichtung
- (2): Sender
- (3): Sendelichtstrahlen
- (4): Empfangslichtstrahlen
- (5): Empfänger
- (5a): Empfangselemente
- (51): Zeilen
- (52): Spalten
- (6): Objekt
- (7): Empfangsoptik
- (7a): Linsenelement
- (8): Auswerteeinheit
- (9): Ausgang
- (10): Eingang
- (11): Sendeoptik
- (12): Empfangslichtfleck
- (13): Streufolie
- (14): Klarsichtfolie
- (15): Array

## Patentansprüche

1. Optoelektronische Vorrichtung zur Erfassung von Objekten in einem Überwachungsbereich, mit einem Sendelichtstrahlen emittierenden Sender, einem Empfangslichtstrahlen empfangenden Empfänger und einer Auswerteeinheit, in welcher die am Ausgang des Empfängers anstehenden Empfangssignale zur Generierung eines Objektfeststellungssignals ausgewertet werden, **dadurch gekennzeichnet, dass** der Empfänger (5) wenigstens eine Zeile mit Empfangselementen (5a) aufweist, wobei der Sender (2) zentrisch vor der Zeile angeordnet ist, und dass in der Auswerteeinheit (8) aus dem Verlauf der Empfangssignale der einzelnen Empfangselemente (5a) die Lage eines Objektes (6) im Überwachungsbereich bestimmt wird.

2. Optoelektronische Vorrichtung nach Anspruch 1, **dadurch gekennzeichnet, dass** dem Empfänger (5) eine Empfangsoptik (7) vorgeordnet ist, in deren Zentrum der Sender (2) angeordnet ist.

3. Optoelektronische Vorrichtung nach einem der Ansprüche 1 oder 2, **dadurch gekennzeichnet, dass** der Empfänger (5) von einer CMOS-Zeile oder einer CCD-Zeile gebildet ist.

4. Optoelektronische Vorrichtung nach einem der Ansprüche 1 oder 2, **dadurch gekennzeichnet, dass** der Empfänger (5) von einem matrixförmigen CMOS-Array oder einem CCD-Array gebildet ist.

5. Optoelektronische Vorrichtung nach Anspruch 4, **dadurch gekennzeichnet, dass** in der Auswerteeinheit (8) selektiv einzelne Spalten (52) und/oder Zeilen (51) eines CMOS-Arrays oder CCD-Arrays auswertbar sind.

6. Optoelektronische Vorrichtung nach einem der Ansprüche 1 - 5, **dadurch gekennzeichnet, dass** der Normalenvektor der lichtempfindlichen Fläche des Empfängers (5) mit der optischen Achse des Senders (2) zusammenfällt.

7. Optoelektronische Vorrichtung nach einem der Ansprüche 1 - 6, **dadurch gekennzeichnet, dass** in der Auswerteeinheit (8) aus der Lage wenigstens eines Maximums der Empfangssignale auf der lichtempfindlichen Fläche des Empfängers (5) die Distanz eines Objekts (6) bestimmbar ist.

8. Optoelektronische Vorrichtung nach Anspruch 7, **dadurch gekennzeichnet, dass** zur Bestimmung der Distanz eines Objekts (6) zwei beidseits des Zentrums des Empfängers (5) liegende Maxima der Empfangssignale herangezogen werden.

9. Optoelektronische Vorrichtung nach einem der Ansprüche 7 oder 8, **dadurch gekennzeichnet, dass** aus den Pegelwerten zweier beidseits des Zentrums des Empfängers (5) liegenden Maxima der Empfangssignale die Orientierung der Oberfläche eines Objekts (6) bestimmbar ist.

10. Optoelektronische Vorrichtung nach einem der Ansprüche 1 - 9, **dadurch gekennzeichnet, dass** aus den Amplitudenwerten der Empfangssignale der einzelnen Empfangselemente (5a) die Oberflächenbeschaffenheit eines Objektes (6) bestimmbar ist.

11. Optoelektronische Vorrichtung nach einem der Ansprüche 1 - 10, **dadurch gekennzeichnet, dass** zur Objekterfassung in der Auswerteeinheit (8) die aktuell ermittelten Pegel der Empfangssignale mit Referenz-Empfangssignalpegeln verglichen werden.

12. Optoelektronische Vorrichtung nach einem der Ansprüche 1 - 11, **dadurch gekennzeichnet, dass** die Referenz-Empfangssignalpegel während eines Einlernvorganges bestimmt werden.

13. Optoelektronische Vorrichtung nach Anspruch 12, **dadurch gekennzeichnet, dass** während des Einlernvorgangs ein Referenz-Objekt im Überwachungsbereich angeordnet ist, auf welches die Sendelichtstrahlen (3) geführt sind.

14. Optoelektronische Vorrichtung nach einem der Ansprüche 1 - 13, **dadurch gekennzeichnet, dass** der Sender (2) im Pulsbetrieb betrieben wird.

15. Optoelektronische Vorrichtung nach Anspruch 14, **dadurch gekennzeichnet, dass** zur Elimination von Störsignaleinflüssen die bei aktiviertem Sender (2) ermittelten Empfangssignale mit bei deaktiviertem Sender (2) ermittelten Empfangssignalen verglichen werden.

16. Optoelektronische Vorrichtung nach einem der Ansprüche 1 - 15, **dadurch gekennzeichnet, dass** die in der Auswerteeinheit (8) ermittelten Distanzwerte mit wenigstens einem Schwellwert zur Generierung eines binären Objektfeststellungssignals verglichen werden.

17. Optoelektronische Vorrichtung nach einem der Ansprüche 1 - 16, **dadurch gekennzeichnet, dass** diese in einem Rundhülsengehäuse integriert ist.
